# EUROPÄISCHE PATENTSCHRIFT

(11) **EP 3 677 807 B1**
(45) Veröffentlichungstag und Bekanntmachung des Hinweises auf die Patenterteilung: **30.03.2022**
(21) Anmeldenummer: 20153033.4
(22) Anmeldetag: 11.09.2014
(51) Int. Cl.: F16D 13/70

(54) **ÜBERSETZUNGSSYSTEM FÜR EINE MEHRSCHEIBENREIBKUPPLUNG**
TRANSMISSION SYSTEM FOR A MULTI-WRITE FRICTION CLUTCH
SYSTÈME DE TRANSMISSION POUR UN EMBRAYAGE À FRICTION À PLUSIEURS DISQUES

(30) Priorität: 27.03.2014 DE 102014205773
(43) Veröffentlichungstag der Anmeldung: 08.07.2020
(62) Teilanmeldung aus: 14793010.1
(73) Patentinhaber: Schaeffler Technologies AG & Co. KG, 77815 Bühl (DE)
(72) Erfinder: BAUMANN, Michael, 77886 Lauf (DE); REIMNITZ, Dirk, 77815 Bühl (DE)

(56) Entgegenhaltungen:
- WO-A1-03/081065
- DE-A1- 10 013 857
- US-A- 2 031 311

## Beschreibung

Die Erfindung betrifft eine Mehrscheibenreibkupplung mit einem Übersetzungssystem, ein Verfahren zur Montage einer Mehrscheibenreibkupplung mit dem Übersetzungssystem.

Trockene Kupplungen verfügen nach derzeitigem Stand der Technik meist über eine Reibscheibe, beziehungsweise bei Doppelkupplungen über eine Reibscheibe je Teilkupplung. Diese Reibscheiben weisen je zwei Reibflächen auf, mit denen sie an den jeweils benachbarten Reibplatten, also der/den Anpressplatte(n) und/oder Gegenplatte, angepresst anliegen, wenn sie zur Drehmomentübertragung betätigt werden und bilden so mit den benachbarten Reibplatten zwei Reibstellen aus. Die Gegenplatte ist häufig als Zentralsteg und/oder einstückig mit einem Schwungrad ausgebildet. Das übertragbare Moment einer Reibkupplung lässt sich bei gleicher Anpresskraft, gleichem Durchmesser und gleichen Reibverhältnissen (Reibwert) steigern, indem die Anzahl der Reibstellen erhöht wird. Anpressplatten, die zwischen einer ersten Anpressplatte und einer Gegenplatte angeordnet sind, also auch zwei Reibstellen ausbilden, werden als Zwischenplatten bezeichnet. Dieses Prinzip wird häufig bei Lamellenkupplungen eingesetzt, wie sie beispielsweise auch bei nasslaufenden Einfachkupplungen oder Doppelkupplungen verwendet werden. Trockene Doppelkupplungen mit mehr als einer Reibscheibe pro Teilkupplung (trockene Mehrscheibendoppelkupplungen) sind derzeit noch nicht auf dem Markt. Für die Markteinführung müssen die axial beweglichen Reibplatten, also die Anpressplatten und die Zwischenplatten, auch ohne Ölschmierung ein Lüften aller Reibscheiben und damit ein schleppmomentfreies Öffnen der trockenen Kupplung garantieren. Häufig wird dies mittels einer auf Blattfedern beruhenden Führungseinrichtung umgesetzt, bei der sich die Zwischenplatten auf den Blattfedern der Anpressplatten abstützen, so dass die Bewegungen der Zwischenplatten und der Anpressplatten im richtigen Verhältnis synchronisiert werden. Dieses Funktionsprinzip wird beispielsweise in den Patentschriften DE 100 13 857 A1, DE 10 2011 018 589 A1 und DE 10 2011 086 929 A1 beschrieben. Bei den bekannten Varianten müssen die Eigenschaften des Führungsmechanismus auf die restliche Kupplungsgeometrie und die Kupplungskennlinien abgestimmt sein. Nur wenn der Führungsmechanismus die Zwischenplatte genau in die richtige Position stellt und im richtigen Verhältnis zur Anpressplattenbewegung verschiebt, weist die Reibkupplung eine geeignete Übersetzung der Bewegung der betätigten Anpressplatte auf und zeigt das gewünschte Verhalten und weist die richtige(n) Kraftkennlinie(n) und Momentenkennlinie(n) auf.

So ist auch aus der WO 03/081065 A1 eine Kupplung des normal geschlossenen Typs bekannt, bei dem sich die Zwischenplatte über einen Abstandsarm an den Blattfedern abstützt, welche die Anpressplatte mit dem Kupplungsdeckel koppeln. Über diesen Abstandsarm wird durch eine entsprechende Positionierung realisiert, dass die Zwischenplatte ungefähr den halben Lüftweg der Anpressplatte verfährt.

Weiter ist aus der US 2 031 311 A eine Kupplung bekannt, bei der über eine Einstellschraube Druck auf Blattfederpakete ausgeübt werden kann, so dass über eine Änderung des Drucks ein geänderter Einrückweg durch Verschleiß der Reibscheiben ausgeglichen werden kann.

Aufgrund fertigungsbedingt unvermeidbarer Toleranzen, welche dazu führen, dass die Bauteile nicht immer exakt gleich sind und dass nicht immer alle Bauteile exakt der theoretischen Idealkontur entsprechen, ist es erforderlich, jede Führungseinrichtung an die Eigenschaften der jeweiligen Reibkupplung oder zumindest an die Eigenschaften der jeweiligen Charge anzupassen. Die bisher hierzu bekannten Vorrichtungen und Montageverfahren sind aufwendig und teuer.

Ein besonderer Schwerpunkt liegt dabei auf Lösungen, die sich relativ spät im Montageprozess realisieren lassen, da zu diesem Zeitpunkt meist schon viele Kupplungseigenschaften feststehen. Diese Kupplungseigenschaften können dann bei der Einstellung berücksichtigt und kompensiert werden.

Hiervon ausgehend stellt sich die vorliegende Erfindung der Aufgabe, die aus dem Stand der Technik bekannten Nachteile zumindest teilweise zu überwinden.

Die Erfindung wird gelöst mit einer Mehrschiebenreibkupplung nach Anspruch 1 und einem Verfahren zur Montage eines Übersetzungssystems in einer Mehrscheibenreibkupplung nach Anspruch 8.

Die Erfindung betrifft eine Mehrscheibenreibkupplung mit einem Übersetzungssystem , welches zumindest die folgenden Komponenten umfasst:
- eine Mehrzahl von axialen Führungseinrichtungen jeweils zur Anordnung zwischen zwei axial relativ zueinander beweglichen Reibplatten, wobei zumindest eine erste axiale Führungseinrichtung zur Anordnung zwischen einer axial fixierten Gegenplatte und einer ersten axial bewegbaren Anpressplatte eingerichtet ist, und wobei zumindest eine weitere axiale Führungseinrichtung zur Anordnung zwischen einer axial bewegbaren Anpressplatte oder der axial fixierten Gegenplatte und einer weiteren axial bewegbaren Anpressplatte eingerichtet ist;
- zumindest eine Übersetzungseinrichtung mit zumindest einem Übersetzungsabnehmer zur Befestigung an einer Anpressplatte, wobei eine Übersetzungseinrichtung einer axialen Führungseinrichtung zugeordnet ist, wobei die zugeordnete axiale Führungseinrichtung im Einbau in einer Mehrscheibenreibkupplung zwischen jeweils anderen Reibplatten angeordnet ist. Das Übersetzungssystem kennzeichnet sich vor allem dadurch, dass weiterhin zumindest eine Justiervorrichtung umfasst ist, mittels welcher die relative Lage zwischen der zumindest einen Übersetzungseinrichtung und einer Reibplatte oder zwischen der zumindest einen Übersetzungseinrichtung und der zugeordneten axialen Führungseinrichtung oder zwischen einer Reibplatte und der zugeordneten axialen Führungseinrichtung justierbar ist.

Das hier vorgeschlagene Übersetzungssystem ist dazu eingerichtet, die Bewegung der Zwischenplatten, welche nicht mittels direktem Kontakt mit einem Betätigungssystem betätigbar sind, entsprechend der Bewegung der ersten Anpressplatte, welche mittels direktem Kontakt mit dem Betätigungssystem betätigbar ist, entsprechend den gewünschten Vorgaben zu übersetzen. Reibplatte bezeichnet hier die axial fixierte Gegenplatte und die axial bewegbaren Anpressplatten, wobei Anpressplatte wiederum die erste Anpressplatte und die zumindest eine Zwischenplatte bezeichnet. Beispielsweise ist eine Übersetzung gewünscht, bei der die veränderbaren Abstände zwischen jeweiligen Reibpartnern jeweils gleich sind. Reibpartner sind eine Reibplatte und eine Reibscheibe, oder auch Reiblamelle, die jeweils eine, mittels relativer axialer Bewegung zueinander, lösbare reibschlüssige Drehmomentübertragung ermöglichen. Aus der hier beispielhaft genannten Forderung gleicher Abstände folgt, dass die erste Anpressplatte den vollen Betätigungsweg beschreibt, der sich aus der Summe der einzelnen Abstände ergibt, und die zumindest eine weitere Anpressplatten, also eine Zwischenplatte, einen Teilweg des gesamten Betätigungswegs abhängig von der Anzahl der Anpressplatten ausführen. Der Teilweg berechnet sich mit einem Faktor multipliziert mit dem Gesamtweg, wobei der Faktor sich aus dem Verhältnis der Nummer der Anpressplatte ihrer Reihenfolge nach, beginnend nach der Gegenplatte, zur Gesamtzahl zusammensetzt. Beispielsweise würde bei einem Drei-Reibplattensystem die einzige Zwischenplatte den halben Gesamtweg beschreiben (die Nummer der Zwischenplatte ist 1 nach der Gegenplatte, die Anzahl der Anpressplatten ist 2) und bei einem Vier-Reibplattensystem die erste Zwischenplatte ein Drittel des Gesamtwegs (die Nummer ist 1, die Anzahl ist 3) und die zweite Zwischenplatte zwei Drittel des Gesamtwegs (die Nummer ist 2, die Anzahl ist 3).

Das Übersetzungssystem ist für eine Mehrscheibenreibkupplung eingerichtet. Zunächst sind eine Mehrzahl axialer Führungseinrichtungen vorgesehen, die in der Regel der Anzahl der beweglichen Reibplatten, also der Anpressplatten, entspricht, beziehungsweise von denen vorzugsweise pro Anpressplatte jeweils eine Mehrzahl über den Umfang verteilt sind, besonders bevorzugt jeweils drei axiale Führungseinrichtungen über den Umfang verteilt sind. Diese axialen Führungseinrichtungen sind dabei bevorzugt als Blattfedern ausgebildet, es sind aber auch ergänzend oder alternativ gelenkig gelagerte Hebelelemente ohne Federanteil einsetzbar. In jedem Falle erstrecken sich die axialen Führungseinrichtungen zwischen zwei Reibplatten und begrenzen oder verhindern eine relative Verdrehung der zwei zugeordneten Reibplatten bei gleichzeitig möglicher axialer Relativbewegung zueinander. Die axialen Führungseinrichtungen sind in verschiedenen Konfigurationen mit unterschiedlichen Reibplattenpaarungen verbindbar. Bei einer bevorzugten Ausführungsform sind die axialen Führungseinrichtungen jeweils einseitig mit der (axial fixierten) Gegenplatte verbunden und auf der anderen Seite mit einer jeweiligen Anpressplatte. Bei einer anderen Ausführungsform sind die axialen Führungseinrichtungen zum Beispiel in Reihe geschaltet und jeweils zwischen benachbarten Reibplatten angeordnet.

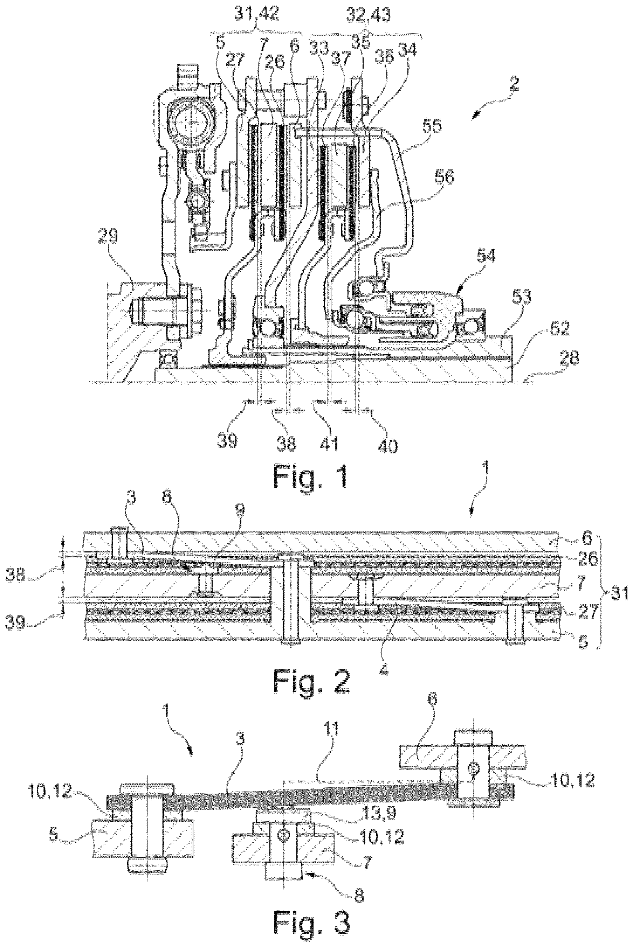

Zur Übertragung der Bewegung der ersten (direkt betätigten) Anpressplatte auf die weiteren (indirekt mittels des Übersetzungssystems betätigten) Anpressplatten, welche auch als Zwischenplatten bezeichnet werden, ist zumindest eine Übersetzungseinrichtung vorgesehen. Diese Übersetzungseinrichtung umfasst zumindest einen Übersetzungsabnehmer, welcher mit einer axialen Führungseinrichtung zur Anlage gebracht wird. Bevorzugt wird pro Zwischenplatte beziehungsweise pro Führungseinrichtung ein Übersetzungsabnehmer vorgesehen. Die dem Übersetzungsabnehmer zugeordnete axiale Führungseinrichtung ist nicht mit der Anpressplatte verbunden, an der der Übersetzungsabnehmer angeordnet ist; denn es soll eine Bewegung einer anderen Anpressplatte auf die zugeordnete Anpressplatte des Übersetzungsabnehmers übertragen werden. Beispielsweise ist eine axiale Führungseinrichtung zwischen der ersten Anpressplatte und der Gegenplatte angeordnet und eine zweite axiale Führungseinrichtung zwischen der zweiten Anpressplatte, beziehungsweise der ersten Zwischenplatte, und der Gegenplatte angeordnet, wobei der Übersetzungsabnehmer an der zweiten Anpressplatte angeordnet ist und die zugeordnete axiale Führungseinrichtung ist die axiale Führungseinrichtung zwischen der ersten Anpressplatte und der Gegenplatte. Eine solche Anordnung ist in der Fig. 2 dargestellt. Es wird an dieser Stelle noch einmal explizit darauf hingewiesen, dass eine Vielzahl unterschiedlicher Konfigurationen möglich sind, und dass sich die genaue Zuordnung des Übersetzungsabnehmers zu den vorhandenen axialen Führungseinrichtungen aus der oben bezeichneten Aufgabenstellung ergibt.

Das grundsätzliche Übersetzungsverhältnis wird in Abhängigkeit von der Zwischenplatte beziehungsweise einer geforderten Bewegung der Zwischenplatte bei einer Betätigung eingerichtet. Beispielsweise bei zwei beweglichen Reibplatten, also zwei Anpressplatten, ist der Übersetzungsabnehmer im Einbau in etwa mittig der zugeordneten axialen Führungseinrichtung angeordnet. Bei drei Anpressplatten wird der erste Abnehmer bei zwei Drittel der Länge der axialen Führungseinrichtung der ersten Anpressplatte angeordnet und der zweite Abnehmer bei einem Drittel der Länge der axialen Führungseinrichtung der ersten Anpressplatte oder bei der Hälfte der Länge der axialen Führungseinrichtung der zweiten Anpressplatte angeordnet.

Wenn die Führungseinrichtung bauartbedingt kein lineares Verhältnis zwischen ihrer Länge und dem von ihr zurückgelegten Axialweg garantiert, kann der Übersetzungsabnehmer trotzdem genutzt werden, indem er an den Stellen positioniert wird, an denen die Führungseinrichtung das gewünschte Übersetzungsverhältnis ermöglicht zum Beispiel 1/2, 1/3 und/oder 2/3 des ersten Anpressplattenweges.

Gemäß dieser Erfindung wird nun eine Justiervorrichtung vorgeschlagen, die es ermöglicht, bevorzugt nach der Montage der Mehrscheibenreibkupplung das Übersetzungssystem zu justieren, sodass in diesem Schritt bereits alle Abweichungen infolge von Toleranzen und Formabweichungen festliegen und zugleich die Mehrscheibenreibkupplung für eine gewünschte Kraftkennlinie und Momentenkennlinie in sich justiert ist. Die Justiervorrichtung kennzeichnet sich vor allem dadurch, dass entweder zusätzliche Justierelemente vorgesehen sind, und/oder dass die vorhandenen Einrichtungen, die mit der Übersetzung der Bewegung im Zusammenhang stehen, derart beweglich und/oder verformbar sind, dass ein Justieren möglich ist. Somit kann die Kraftkennlinie und die Momentkennlinie der Mehrscheibenreibkupplung abhängig von den vorliegenden Toleranzen eingestellt werden, wobei die Übersetzungseinrichtung zunächst hierfür nicht in Betracht gezogen werden muss.

Gemäß einer weiteren vorteilhaften Ausführungsform des Übersetzungssystems umfasst die Justiervorrichtung zumindest eine Unterlegscheibe, welche jeweils zur Anordnung zwischen zumindest einer der folgenden Paarungen eingerichtet ist:
- dem Übersetzungsabnehmer und der zugeordneten Anpressplatte, an der der Übersetzungsabnehmer im Einbau in einer Mehrscheibenreibkupplung befestigt ist; und
- der zugeordneten axialen Führungseinrichtung und einer jeweiligen Reibplatte, an der die zugeordnete axiale Führungseinrichtung im Einbau befestigt ist.

Mittels einer Unterlegscheibe beziehungsweise mehrerer Unterlegscheiben ist die relative Lage in axialer Richtung zwischen dem Übersetzungsabnehmer und der Führungseinrichtung einstellbar. Hierbei ist die Lage des Übersetzungsabnehmers selbst oder die Lage der axialen Führungseinrichtung veränderbar. Besonders bevorzugt ist eine Einstellung der zugeordneten axialen Führungseinrichtung mittels der zumindest einen Unterlegscheibe möglich, wobei der Anstellwinkel der Führungseinrichtung veränderbar ist. Eine solche Justiervorrichtung ist besonders einfach in der Handhabung und kostengünstig in der Umsetzung, weil eine Unterlegscheibe ein Massenfertigungsteil ist, das mit ausreichend genauer Normung der Dicke der Unterlegscheibe sehr kostengünstig zur Verfügung steht.

Gemäß einer weiteren vorteilhaften Ausführungsform umfasst die Justiervorrichtung zumindest einen Niet, wobei der Niet bevorzugt einstückig einen Übersetzungsabnehmer der zumindest einen Übersetzungseinrichtung bildet, wobei der Niet mittels zumindest einer der folgenden Maßnahmen justierbar ist:
- Veränderung der Länge mittels einer definierten Verpressung des Niets;
- Veränderung der Kopfform, wobei der Niet bevorzugt eine Spitze und eine Krempe aufweist, wobei die Länge der Spitze und/oder der Krempe und/oder der axiale Versatz zwischen Krempe und Spitze einstellbar ist;
- der Niet einen Pressabschnitt aufweist, wobei mittels des Pressabschnitts der Niet in der zugeordneten Anpressplatte teilweise versenkbar ist.

Mittels der Verwendung eines Niets als Justiervorrichtung ist eine besonders einfach zu handhabende und kostengünstige Umsetzung vorgeschlagen, bei der kein zusätzliches Element benötigt wird. In einer ersten Variante wird ein Niet eingesetzt, der zwischen einer minimalen Haltekraft und einer maximalen Haltekraft definiert verpressbar ist, sodass eine ausreichende Kraftübertragung garantiert ist und zugleich keine Überbeanspruchung der Befestigungsvorrichtung des Niets, zum Beispiel einer Lasche der Zwischenplatte, ausgeübt wird. Bevorzugt wird die Verpressung mittels einer Längenlehre oder eine definierte Kraftaufgabe eingestellt.

Bei einer bevorzugten Ausführungsform wird die Kopfform des Niets verändert, sodass eine geeignete Anlage mit der zugeordneten Führungseinrichtung ermöglicht ist. Besonders bevorzugt weist der Niet dabei eine Spitze und eine Krempe auf, die einer Hutform ähnelt. Hierdurch entstehen zwei Absätze mit einem radial inneren Kontaktbereich (Spitze) und einem radial äußeren Kontaktbereich (Krempe). Hierbei ist eine sich über den Betätigungsweg ändernde Übersetzung einstellbar, weil sich die relative Neigung der axialen Führungseinrichtung abhängig von der Betätigungsauslenkung verändert. Bei beispielsweise einer flachen Neigung liegt die Führungseinrichtung auf der Spitze auf und bei einer steilen Neigung liegt die Führungseinrichtung auf der Krempe auf.

In einer bevorzugten Ausführungsform weist der Niet einen Pressabschnitt auf, welcher bevorzugt aus einem härteren Material, zum Beispiel gehärteten Metall, als das Material der Befestigungsvorrichtung zur Aufnahme des Niets gebildet ist. Hierdurch ist der Niet mittels einer geeigneten Kraftaufgabe in die Befestigungsaufnahme der zugeordneten Anpressplatte teilweise versenkbar und damit axial einstellbar. Auch hierbei wird bevorzugt eine Längenlehre verwendet oder eine definierte Kraft auf den Niet aufgebracht. Bevorzugt ist der Niet mit einer Unterlegscheibe kombinierbar, wobei der Pressabschnitt durch die Unterlegscheibe gebildet ist, sodass keine zusätzliche Härtung des Niets notwendig ist, sondern eine separate entsprechend härtere oder gehärtete Unterlegscheibe verwendbar ist. Alternativ kann auch eine Unterlegscheibe verwendet werden, die deutlich weicher ist als die Anpressplatte, wenn der Pressabschnitt der Niete in die Unterlegscheibe eingepresst werden soll statt in die Anpressplatte.

Gemäß einer weiteren vorteilhaften Ausführungsform umfasst die Justiervorrichtung zumindest einen ersten Flansch zur Aufnahme eines Übersetzungsabnehmers der zumindest einen Übersetzungseinrichtung und/oder zumindest einen zweiten Flansch zur Aufnahme der zugeordneten axialen Führungseinrichtung, wobei der zumindest eine Flansch mittels zumindest einer der folgenden Maßnahmen anpassbar ist:
- Fräsen einer Kontaktfläche der Aufnahme;
- Kaltverformen zumindest der Kontaktfläche der Aufnahme;
- Durchzug eines bolzenförmigen Übersetzungsabnehmers; und
- Einpressen eines Übersetzungsabnehmers.

Der Flansch ist hierbei besonders bevorzugt einstückig mit der jeweiligen zugeordneten Anpressplatte ausgebildet. Es ist aber auch vorteilhaft, einen zusätzlichen Flansch beziehungsweise ein zusätzliches Blech vorzusehen, welches mit der zugeordneten Anpressplatte verbindbar ist und welches eine geeignete Festigkeit und Verformbarkeit aufweist. Eine besonders einfache Umformung ist dabei die spanende Bearbeitung der Kontaktfläche der Aufnahme mittels zum Beispiel Fräsen. Hierbei ist eine besonders exakte Einstellung der Abmessung der Kontaktfläche und der relativen Lage einstellbar. Auch für eine gewünschte Neigung ist dieses Justieren besonders geeignet.

Besonders bevorzugt wird die Kontaktfläche kalt verformt, das heißt die axiale Lage oder Neigungslage der Kontaktfläche wird verändert. Geeignete Kaltformverfahren sind hierbei zum Beispiel Biegen, Kanten oder Tiefziehen.

In einer bevorzugten Ausführungsvariante wird ein bolzenförmiger Übersetzungsabnehmer durch die Aufnahme durchgezogen, sodass hier ein Durchzugflansch entsteht, mit einstellbaren Abmessungen, wobei dieser Durchzugflansch auf die gewünschte Länge und/oder Lage justierbar ist. Der Durchzugflansch muss nicht zwingend von Übersetzungsnehmer gebildet werden. Aber auch dann kann die Länge des Durchzugflansches separat oder mit dem Übersetzungsnehmer auf das richtige Maß kalibriert werden.

In einer vorteilhaften Ausführungsform wird der Übersetzungsabnehmer eingepresst, sodass auch hier abhängig von der Einpresskraft eine Lageveränderung des Übersetzungsabnehmers möglich ist.

Es sei dabei darauf hingewiesen, dass bei diesen vorgeschlagenen Vorrichtungen auch eine Verlagerung in Umfangsrichtung und/oder radialer Richtung möglich ist. Ganz besonders bevorzugt wird zumindest eine der hier vorgeschlagenen Justiervorrichtungen mit zumindest einer weiteren oben beschriebenen Justiervorrichtungen kombiniert.

Gemäß einer vorteilhaften Ausführungsform umfasst die Justiervorrichtung zumindest eine Schraube, wobei die Schraube bevorzugt eine Kontaktspitze eines Übersetzungsabnehmers der zumindest einen Übersetzungseinrichtung ausbildet.

Bei dieser vorteilhaften Ausführungsform bildet die Schraube die Kontaktspitze des Übersetzungsabnehmers aus und ist mit Hilfe der Verschraubung justierbar. Ganz besonders bevorzugt ist die Schraube dabei selbstsichernd ausgeführt, zum Beispiel durch ein Kantprofil, ein trilobulares Gewinde oder einen anaeroben Kleber (zum Beispiel Loctite). In einer weiteren Variante oder ergänzend ist eine Kontermutter vorgesehen, die die eingestellte Lage der Schraube sichert. Insbesondere ist die Schraube in einem Endzustand der Montage einbringbar, wobei die Schraube beziehungsweise die Kontaktspitze bis zum Anliegen an die zugeordnete Führungseinrichtung einschraubbar ist. Hierdurch ist das Justieren des Übersetzungsabnehmers besonders robust und wenig fehleranfällig ist. Bevorzugt ist die Schraube als Madenschraube ausgeführt. Die Verwendung einer Madenschraube ist besonders einfach in der Handhabung bei der Montage und bei dem Justieren und verbraucht wenig Platz. Grundsätzlich ist auch eine jegliche andere Schraube verwendbar, wobei der Schraubenkopf für viele Anwendungen zu viel Platz einnimmt und/oder die Einstellbarkeit beschränkt.

Gemäß einer weiteren vorteilhaften Ausführungsform ist die Justiervorrichtung einstückig mit der zugeordneten Anpressplatte als Zapfen ausgebildet und den Übersetzungsabnehmer der Übersetzungseinrichtung bildet, wobei der Zapfen mittels Kaltumformen lageveränderbar ist.

Der hier vorgeschlagene einstückig ausgebildete Zapfen ist besonders bevorzugt an einer Stelle der Anpressplatte angeordnet, bei der eine erhöhte Verformbarkeit der Anpressplatte gegeben ist. Beispielsweise ist die Dicke der Anpressplatte im Bereich des Zapfens verjüngt. Ein solcher Zapfen kann durch Kaltumformen zum Beispiel Pressen in seiner Lage und Form verändert werden, insbesondere auch in Umfangsrichtung und in radialer Richtung. Auch kann der Zapfen mit einer Spitze und einer Krempe ausgebildet werden, sodass mehrere Kontaktflächen für eine veränderte Übersetzung über den Betätigungsweg einstellbar ist.

Gemäß einer weiteren vorteilhaften Ausführungsform ist die Justiervorrichtung als Stift ausgebildet, wobei der Stift den Übersetzungsabnehmer der Übersetzungseinrichtung bildet, wobei der Stift an der zugeordneten Anpressplatte mittels Schweißen, bevorzugt Reibschweißen, lageveränderbar befestigbar ist.

Bei dieser Ausführungsform ist die Lage des Übersetzungsabnehmers vollkommen frei einstellbar, indem ein separater Stift mittels Schweißens an einer beliebigen Stelle der zugeordneten Anpressplatte angebunden wird. Ganz besonders bevorzugt wird hierbei Reibschweißen verwendet, sodass der Wärmeeintrag lokal begrenzt ist und eine (nahezu) vollflächige Verbindung zwischen dem Stift und der Anpressplatte erreicht wird. Die verfahrensbedingt auftretende Lageabweichung ist für viele Anwendungen ausreichend exakt.

Gemäß einem weiteren Aspekt der Erfindung wird ein Verfahren zur Montage eines Übersetzungssystems in einer eine Mehrscheibenreibkupplung nach einer Ausführungsform gemäß der obigen Beschreibung vorgeschlagen, wobei zunächst die Reibplatten und Reibscheiben in der Mehrscheibenreibkupplung vormontiert und zueinander justiert werden und anschließend das Übersetzungssystem justiert wird. Alternativ kann bereits ein Teil des Übersetzungssystems zeitgleich mit den Platten montiert werden zum Beispiel die Führungseinrichtungen und die restlichen Teile des Übersetzungssystems zum Beispiel, die Übersetzungsnehmer werden anschließend montiert und justiert. In einer weiteren alternativen Variante wird die Kupplung erst komplett montiert und vermessen, bevor die Justage des Übersetzungssystems erfolgt.

Bei diesem Verfahren wird die Mehrscheibenreibkupplung zunächst in sich eingerichtet, sodass die erwünschte Kraftkennlinie und Momentenkennlinie abhängig von Toleranzen und unabhängig von weiteren Einflüssen eingestellt wird. Anschließend, wenn die Lage der Reibplatten und Reibscheiben festliegt wird das Übersetzungssystem montiert beziehungsweise ist bereits bei der Montage der Mehrscheibenreibkupplung mitmontiert worden und wird dann entsprechend justiert. Die einzelnen Montageschritte sind dabei in der vorhergehenden Beschreibung in Bezug auf das Übersetzungssystem im Detail dargestellt und darauf wird hier Bezug genommen.

Erfindungsgemäß wird eine Mehrscheibenreibkupplung mit einer Rotationsachse zum lösbaren Verbinden einer Abtriebswelle mit einem Antriebsstrang vorgeschlagen, welche zumindest die folgenden Komponenten aufweist:
- zumindest ein Reibpaket mit jeweils zumindest drei Reibplatten und mit jeweils zumindest zwei jeweils zwischen zwei Reibplatten angeordneten Reibscheiben, über welches im angepressten Zustand ein Drehmoment übertragbar ist;
- zumindest ein Übersetzungssystem nach einer Ausführungsform gemäß der obigen Beschreibung, wobei die Anpressplatten von der jeweils benachbarten Reibscheibe jeweils einen gleichen Abstand aufweisen, wobei bevorzugt das Übersetzungssystem gemäß des Verfahrens zur Montage des Übersetzungssystems gemäß der obigen Beschreibung montiert ist.

Die Mehrscheibenreibkupplung ist dazu eingerichtet, ein Drehmoment lösbar von einer Abtriebswelle auf einen Antriebsstrang und umgekehrt zu übertragen. Dies wird in der Regel über das zumindest eine Reibpaket erreicht, welches eine axial verschiebbare, in der Regel mit der Abtriebswelle rotationsfeste, Anpressplatte aufweist, die gegen zumindest eine korrespondierende Reibscheibe pressbar ist. Infolge der Anpresskraft ergibt sich eine Reibkraft über die Reibfläche, die multipliziert mit dem mittleren Radius der Reibfläche ein übertragbares Drehmoment ergibt. Mittels des Übersetzungssystems ist eine zuverlässige Einstellbarkeit der Mehrscheibenkupplung zu einem sehr späten Zeitpunkt der Montage der Mehrscheibenreibkupplung möglich. Besonders vorteilhaft sind die Reibpartner einer Mehrscheibenreibkupplung zunächst gemäß den Vorgaben für eine gewünschte Kraftkennlinie und Momentenkennlinie abhängig von den Toleranzen und Formabweichungen einstellbar und anschließend das Übersetzungssystem montierbar und justierbar. Damit wird zum einen die Einstellbarkeit der Mehrscheibenreibkupplung vereinfacht und zum anderen sind die Montageschritte übersichtlicher und leichter zu strukturieren.

Gemäß einer weiteren vorteilhaften Ausführungsform der Mehrscheibenreibkupplung ist die Mehrscheibenreibkupplung ein Doppelkupplungsaggregat mit zwei Teilkupplungen, wobei zumindest eine Teilkupplung ein Reibpaket mit einer Mehrzahl von Anpressplatten und Reibscheiben aufweist.

Eine solche Mehrscheibenreibkupplung weißt eine besonders hohe Komplexität und eine Vielzahl von voneinander abhängigen Toleranzen und Formabweichungen auf. Die Mehrscheibenreibkupplung ist dabei trocken oder nass ausführbar. Die Montage des Übersetzungssystems ist ganz am Ende der Montage der Reibpartner vornehmbar und erleichtert damit die Montage der Reibpartner.

Gemäß einem weiteren Aspekt der Erfindung wird ein Drehmomentübertragungsstrang vorgeschlagen, welcher eine Antriebseinheit mit einer Abtriebswelle, einen Antriebsstrang und eine Mehrscheibenreibkupplung gemäß der obigen Beschreibung umfasst, wobei die Abtriebswelle zur Drehmomentübertragung mittels der Mehrscheibenreibkupplung mit dem Antriebsstrang lösbar verbindbar ist.

Der Drehmomentübertragungsstrang ist dazu eingerichtet, ein von einer Antriebseinheit, zum Beispiel einer Energiewandlungsmaschine, bevorzugt einer Verbrennungskraftmaschine oder einem Elektromotor, bereitgestelltes und über ihre Abtriebswelle abgegebenes Drehmoment für eine Nutzung lösbar, also zuschaltbar und abschaltbar, zu übertragen. Eine beispielhafte Nutzung ist zumindest ein Antriebsrad eines Kraftfahrzeugs und/oder ein elektrischer Generator zur Bereitstellung von elektrischer Energie. Um das Drehmoment gezielt und/oder mittels eines Schaltgetriebes mit unterschiedlichen Übersetzungen zu übertragen beziehungsweise eine Übertragung zu trennen, ist die Verwendung der oben beschriebenen Mehrscheibenreibkupplung besonders vorteilhaft, weil diese kostengünstig justierbar ist.

Umgekehrt ist auch eine Aufnahme eines von zum Beispiel einem Antriebsrad eingebrachte Trägheitsenergie, die dann die Antriebseinheit bildet, mittels der Mehrscheibenreibkupplung auf einen elektrischen Generator zur Rekuperation, also der elektrischen Speicherung der Bremsenergie, mit einem entsprechend eingerichteten Drehmomentübertragungsstrang umsetzbar. Weiterhin sind in einer bevorzugten Ausführungsform eine Mehrzahl von Antriebseinheiten vorgesehen, die mittels der Mehrscheibenreibkupplung in Reihe oder parallel geschaltet beziehungsweise voneinander entkoppelt betreibbar sind, beziehungsweise deren Drehmoment jeweils lösbar zur Nutzung zur Verfügung stellbar ist. Beispiele sind Hybridantriebe aus Elektromotor und Verbrennungskraftmaschine, aber auch Mehrzylindermotoren, bei denen einzelne Zylinder (-gruppen) zuschaltbar sind.

Gemäß einem weiteren Aspekt der Erfindung wird ein Kraftfahrzeug vorgeschlagen, welches zumindest ein Antriebsrad aufweist, welches mittels eines Drehmomentübertragungsstrangs gemäß der obigen Beschreibung antreibbar ist.

Die meisten Kraftfahrzeuge weisen heutzutage einen Frontantrieb auf und ordnen daher bevorzugt die Antriebseinheit, beispielsweise eine Verbrennungskraftmaschine oder einen Elektromotor, vor der Fahrerkabine und quer zur Hauptfahrrichtung an. Der Bauraum ist gerade bei einer solchen Anordnung besonders gering und es ist daher besonders vorteilhaft, eine Mehrscheibenreibkupplung kleiner Baugröße zu verwenden. Ähnlich gestaltet sich der Einsatz einer Mehrscheibenreibkupplung in motorisierten Zweirädern, für welche eine deutlich gesteigerte Leistung bei gleichbleibendem Bauraum gefordert wird.

Verschärft wird diese Problematik bei Personenkraftwagen der Kleinwagenklasse nach europäischer Klassifizierung. Die verwendeten Aggregate in einem Personenkraftwagen der Kleinwagenklasse sind gegenüber Personenkraftwagen größerer Wagenklassen nicht wesentlich verkleinert. Dennoch ist der zur Verfügung stehende Bauraum bei Kleinwagen wesentlich kleiner. Der oben beschriebene Drehmomentübertragungsstrang weist eine Mehrscheibenreibkupplung auf, deren Übersetzungssystem besonders einfach Justierbar ist. Damit ist die Flexibilität der Anpassung der gewünschten Kraftkennlinie und Momentenkennlinie deutlich erhöht.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse Kleinwagen und Kleinstwagen nach europäischer Klassifizierung der Klasse der Subcompact Car zugeordnet und im Britischen Markt entsprechen sie der Klasse Supermini beziehungsweise der Klasse City Car. Beispiele der Kleinstwagenklasse sind ein Volkswagen up! oder ein Renault Twingo. Beispiele der Kleinwagenklasse sind ein Alfa Romeo Mito, Volkswagen Polo, Ford Fiesta oder Renault Clio.

Die oben beschriebene Erfindung wird nachfolgend vor dem betreffenden technischen Hintergrund unter Bezugnahme auf die zugehörigen Zeichnungen, die bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: eine Mehrscheibenreibkupplung ausgeführt als Doppelkupplung mit zwei Teilkupplungen;
- Fig. 2:: eine prinzipielle Darstellung einer Konfiguration eines Übersetzungssystems;
- Fig. 3:: ein Übersetzungssystem mit Justiervorrichtung mit Unterlegscheiben;
- Fig. 4:: eine Übersetzungseinrichtung mit Niet mit Spitze und Krempe;
- Fig. 5:: eine Übersetzungseinrichtung wie in Fig. 4 mit vergleichsweise kürzerem Abstand zwischen Spitze und Krempe;
- Fig. 6:: eine Übersetzungseinrichtung mit Durchzug und Niet;
- Fig. 7:: eine isometrische Ansicht einer Übersetzungseinrichtung mit Durchzug und Niet;
- Fig. 8:: eine erste Ausführungsform eines Niets mit einem ersten Pressabschnitt;
- Fig. 9:: eine zweite Ausführungsform eines Niets mit einem zweiten Pressabschnitt;
- Fig. 10:: eine Übersetzungseinrichtung mit kaltverformten Flansch;
- Fig. 11:: eine Übersetzungseinrichtung mit tiefgezogenem Flansch;
- Fig. 12:: eine Übersetzungseinrichtung mit Zapfen in einer Grundform;
- Fig. 13:: eine Übersetzungseinrichtung mit Zapfen mit axialer Kaltverformung;
- Fig. 14:: eine Übersetzungseinrichtung mit Zapfen mit kaltverformter Zapfenform;
- Fig. 15:: eine Übersetzungseinrichtung mit Madenschraube;
- Fig. 16:: eine Übersetzungseinrichtung mit gefräster Kontaktfläche;
- Fig. 17:: eine Übersetzungseinrichtung mit einem angeschweißten Stift;
- Fig. 18:: eine Übersetzungseinrichtung mit einem gefederten Bolzen;
- Fig. 19:: ein Übersetzungssystem mit mehreren Justiervorrichtungen;
- Fig. 20:: das Übersetzungssystem aus Fig.19 nach erfolgter Justage;
- Fig. 21:: ein Übersetzungssystem mit mehreren Justiervorrichtungen in einer zweiten Ausführungsform; und
- Fig. 22:: eine Drehmomentübertragungseinheit in einem Kraftfahrzeug.

Fig. 1 zeigt eine Mehrscheibenreibkupplung 2 in einer Konfiguration als Doppelkupplungsaggregat mit einer ersten Teilkupplung 42, die ein erstes Reibpaket 31 umfasst, und einer zweiten Teilkupplung 43, die ein zweites Reibpaket 32 umfasst. Die Komponenten der Mehrscheibenreibkupplung 2 sind um die zentrale Rotationsachse 28 rotierbar. Die Reibpakete 31 und 32 sind dazu eingerichtet, ein Drehmoment von einer Abtriebswelle 29 auf eine erste Ausgangswelle 52 beziehungsweise eine zweite Ausgangswelle 53 zu übertragen. Die Reibpakete 31 und 32 sind mittels der Betätigungstöpfe 55 beziehungsweise 56 über eine Betätigungseinrichtung 54 getrennt voneinander betätigbar. Das erste Reibpaket 31 umfasst dabei eine erste Gegenplatte 5, eine erste Anpressplatte 6 und eine zweite Anpressplatte 7, wobei die zweite Anpressplatte 7 auch als Zwischenplatte bezeichnet wird. Zwischen der Gegenplatte 5 und den Anpressplatten 6 und 7 ist eine erste Reibscheibe 26 beziehungsweise zweite Reibscheibe 27 angeordnet. Hier ist das erste Reibpaket 31 in gelöstem Zustand gezeigt, sodass ein erster Abstand 38 beziehungsweise ein zweiter Abstand 39 zwischen der Reibscheibe 26 und 27 und der jeweiligen Anpressplatte 6 und 7 vorliegt. Der erste Abstand 38 und der zweite Abstand 39 sollen dabei möglichst gleich groß sein. Ähnlich ist das zweite Reibpaket 32 mit einer zweiten Gegenplatte 33, einer dritten Anpressplatte 34 und einer vierten Anpressplatte 35, wobei die vierte Anpressplatte 35 auch als Zwischenplatte bezeichnet wird, ausgeführt. Zwischen der zweiten Gegenplatte 33 und den Anpressplatten 34 und 35 ist eine dritte Reibscheibe 36 beziehungsweise eine vierte Reibscheibe 37 angeordnet. Auch diese zweite Teilkupplung 43 ist im gelösten Zustand gezeigt, sodass der dritte Abstand 40 und der vierte Abstand 41 vorliegt, die ebenfalls gleich groß sein sollen.

In Fig. 2 ist ein Übersetzungssystem 1 in einer Prinzipskizze dargestellt, wobei in der Darstellung zuunterst die erste Gegenplatte 5, in der Mitte die zweite Anpressplatte 7, beziehungsweise die Zwischenplatte, und zuoberst die Anpressplatte 6 gezeigt ist. Die Reibscheiben 26 und 27 sind von der jeweiligen Anpressplatte 6 und 7 mit dem Abstand 38 und 39 beabstandet, die bevorzugt gleich groß sind. Um diese Abstände 38 und 39 über den gesamten Betätigungsweg der (ersten) Teilkupplung 42 (vergleiche Fig. 1) exakt so einzuhalten, ist an einer ersten axialen Führungseinrichtung 3 eine Übersetzungseinrichtung 8 mit einem an der ersten axialen Führungseinrichtung 3 anliegenden Übersetzungsabnehmer 9 vorgesehen. Zwischen der zweiten Anpressplatte 7 und der Gegenplatte 5 ist eine zweite axiale Führungseinrichtung 4 vorgesehen. Die axialen Führungseinrichtungen 3 und 4 sind hierbei beispielsweise als Blattfedern ausgeführt. Besonders bevorzugt sind über den Umfang des Übersetzungssystems 1 beziehungsweise der Mehrscheibenreibkupplung 2 (vergleiche Fig. 1) mehrere solcher ersten und zweiten axialen Führungseinrichtungen 3 und 4 zwischen einer jeweiligen Paarung von Reibplatten 6, 7 und 5 vorgesehen. In der hier dargestellten Konfiguration sind beide Anpressplatten 6 und 7 jeweils mit der Gegenplatte 5 verbunden. Der Übersetzungsabnehmer 9 ist einer axialen Führungseinrichtung 3 zugeordnet, welche nicht mit der Anpressplatte 7 verbunden ist, mit welcher der Übersetzungsabnehmer 9 verbunden ist. Die zugeordnete axiale Führungseinrichtung 3 ist vielmehr an der ersten Anpressplatte 6 und der ersten Gegenplatte 5 befestigt. Es sind auch andere Konfigurationen, insbesondere eine Reihenschaltung der axialen Führungseinrichtungen 3 und 4 möglich und die Erfindung ist nicht auf diese Konfiguration beschränkt. Gleichwohl wird zum besseren Verständnis in der folgenden Beschreibung auf diese Konfiguration und deren dargestellte Lage Bezug genommen.

In Fig. 3 ist ein Übersetzungssystem 1 gezeigt, bei dem eine Mehrzahl von Unterlegscheiben 12 als Justiervorrichtung 10 vorgesehen sind, wobei jede Unterlegscheibe 12 eine unterschiedliche Dicke aufweisen kann und auch nicht an jeder der gezeigten Stellen vorgesehen sein muss. Eine Unterlegscheibe 12 ist bei der ersten Gegenplatte 5 vorgesehen und hebt die axiale Führungseinrichtung 3 im Bereich der Gegenplatte 5 an. Eine weitere Unterlegscheibe 12 ist im Bereich der ersten Anpressplatte 6 vorgesehen und senkt die axiale Führungseinrichtung 3 im Bereich der ersten Anpressplatte 6 ab. Eine dritte Unterlegscheibe 12 ist bei der Übertragungseinrichtung 8 vorgesehen, die mit der zweiten Anpressplatte 7 verbunden ist und den Übertragungsabnehmer 9 relativ zur axialen Führungseinrichtung 8 positioniert, der hier mittels eines Niets 13 gebildet ist. Hierdurch wird die relative Lage 11, die hier durch zwei Punkte und eine Pfeilverbindung angedeutet ist, verändert. Hierbei ist hauptsächlich eine Veränderung des axialen Abstands zwischen der ersten axialen Führungseinrichtung 3 und dem Übersetzungsabnehmer 9 möglich. Durch die Pfeilverbindung wird die relative Lage 11 zwischen der ersten Anpressplatte 6 und der zweiten Anpressplatte 7 hervorgehoben. Er lässt sich aber auch zusätzlich oder alternativ die relative Lage 11 zwischen der Gegenplatte 5 und der zweiten Anpressplatte 7 justieren.

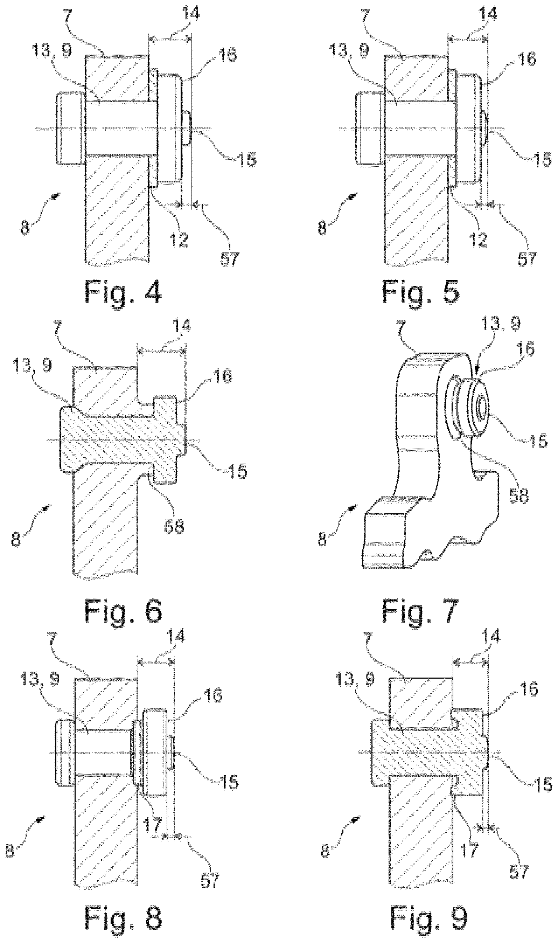

In den Figuren 5 bis 18 werden verschiedene Konfigurationen einer Übersetzungseinrichtung 8 gezeigt, die beispielsweise in einem Übersetzungssystem 1 wie es in Fig. 3 dargestellt ist, verwendbar sind.

In Fig. 4 ist eine Übersetzungseinrichtung 8 gezeigt, bei der ein Niet 13 den Übertragungsabnehmer 9 bildet, wobei zwischen einer gebildeten Krempe 16 und der zweiten Anpressplatte 7 eine Unterlegscheibe 12 vorgesehen ist. In diesem Zusammenspiel ist mittels einer definierten Verpressung oder mit Hilfe einer Abstandslehre eine Einstellung der Länge 14 des Niets 13 ermöglicht. Darüber hinaus ist der axialer Versatz 57 zwischen Spitze 15 und Krempe 16 einstellbar, welche über den Verlauf im Betätigungsweg eine veränderte Anlage zu einer nicht dargestellten axialen Führungseinrichtung 3 bewirkt. Eine Einstellung oder Anpassung kann auch durch die Auswahl der richtigen Unterlegscheibe 12 und/oder des richtigen Niets 13 erfolgen, so dass Bauteile mit der für den Anwendungsfall passenden Form verwendet werden.

In Fig. 5 ist die gleiche Konfiguration wie in Fig. 4 gezeigt, wobei hier der axiale Versatz 57, hier der Abstand zwischen der Spitze 15 und der Krempe 16 verkleinert ist und auch die Länge 14 des Niets 13 verkürzt ist. Diese Einstellung kann mit Hilfe der Unterlegscheibe 12 unterstützt werden, ist aber auch ohne möglich.

In Fig. 6 ist eine Übertragungseinrichtung 8 gezeigt, bei welcher der Übersetzungsabnehmer 9 ebenfalls durch einen Niet 13 gebildet ist, welcher als Abstützniet ausgebildet ist. Bei dem abgebildeten Ausführungsbeispiel ist die zweite Anpressplatte 7 und der Niet 13 so geformt, dass der Durchzug von links nach rechts erfolgt und die Montage des Niets 13 von rechts nach links. Hier wird bevorzugt der Durchzug von einem separaten Werkzeug hergestellt, das auch den Durchzugflansch 58 ausformt. Alternativ kann aber der Übersetzungsabnehmer 9 auch direkt von rechts in die zweite Anpressplatte 7 eingebracht werden und sich dabei seine Aufnahme 21 selbst formen, wenn die zweite Anpressplatte 7 nach der Montage nicht genau die abgebildete Form aufweisen soll. Gemäß einer weiteren Option wird der Niet 13 von links eingesteckt, mittels Einpressen oder mittels Durchziehen, wenn die Kontaktgeometrie wie zum Beispiel Spitze 15 und Krempe 16 erst beim Vernieten gebildet werden kann. Zusammen mit dem (einstellbaren) Durchzugflansch 58 und mit dem Niet 13 ist dann die Länge 14 des Übersetzungsabnehmers 9 einstellbar, sowie auch der axiale Versatz 57 der Spitze 15 und der Krempe 16 zueinander.

In Fig. 7 ist eine isometrische Ansicht der Ausführung, wie sie in Fig. 6 gezeigt ist, dargestellt, wobei hier zusätzlich ein Durchzuggraben bei dem Durchzugflansch 58 gebildet ist.

In Fig. 8 und Fig. 9 ist jeweils ein Niet 13 gezeigt, welcher einen Pressabschnitt 17 aufweist, sodass der Niet in die zweite Anpressplatte 7 eindringt und somit die Länge 14 des Übersetzungsabnehmers 9 einstellbar ist. Auch ist hier vorteilhafter Weise bevorzugt der axiale Versatz 57 von der Spitze 15 zur Krempe 16 einstellbar. In Fig. 9 ist der Pressabschnitt als radial beabstandeter Ring, beziehungsweise als Mehrzahl unterbrochener Ringabschnitte, ausgebildet, sodass eine im Vergleich zu der Konfiguration in Fig. 8 geringere Kraft für das Justieren der Länge 14 notwendig ist.

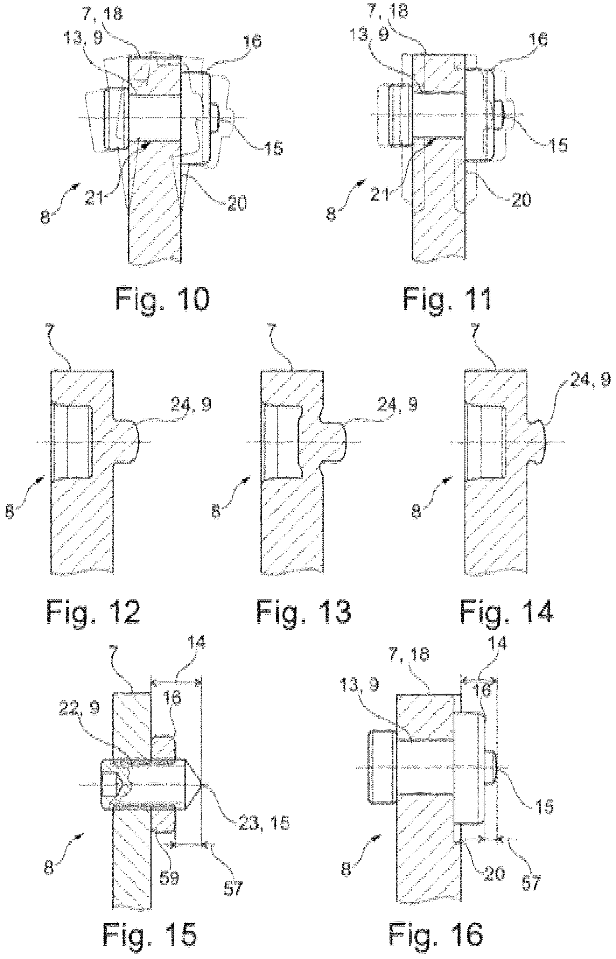

In Fig. 10 und Fig. 11 ist ein erster Flansch 18 gezeigt, welcher einstückig mit der zweiten Anpressplatte 7 gebildet ist, welcher in verschiedenen ausgelenkten Positionen gezeigt ist. Der hier gezeigte Niet 13, welcher den Übersetzungsabnehmer 9 mit einer Spitze 15 und einer Krempe 16 bildet, ist hierbei eine (lediglich) bevorzugte Ausführungsform eines Übersetzungsabnehmers 9. Hierbei wird nicht nur eine Kontaktfläche 20 umgeformt, sondern die gesamte Aufnahme 21 für den Übersetzungsabnehmer 9. Im Unterschied zu Fig. 11 wird in Fig. 10 ein Winkel eingebracht, sodass auch andere Abweichungen als eine rein axiale Verlagerung ausgleichbar und justierbar sind.

In Fig. 12 bis Fig. 14 ist ein einstückig mit der zweiten Anpressplatte 7 gebildeter Zapfen 24 gezeigt, welcher den Übersetzungsabnehmer 9 bildet. In der Fig. 12 ist der Zapfen 24 in einer unveränderten Fertigungslage und unveränderten Form gezeigt. In der Fig. 13 ist der Zapfen 24 axial eingerückt, was hier durch eine Verjüngung der zweiten Anpressplatte 7 im Bereich des Zapfens 24 erleichtert wird. In Fig. 14 ist der Zapfen 24 verformt worden und ist somit kürzer, sodass eine Anpassung des Übersetzungsabnehmers 9 für den gesamten Betätigungsweg ermöglicht ist. Es ist klar, dass die Verformungen aus der Fig.14 und der Fig. 13 miteinander kombinierbar sind.

In Fig. 15 ist eine Übersetzungseinrichtung 8 mit einer als Madenschraube ausgeführte Schraube 22 gezeigt, die mit ihrer Kontaktspitze 23 die Spitze 15 des Übersetzungsabnehmers 9 bildet. Die Schraube 22 ist hierbei in die zweite Anpressplatte 7 eingeschraubt und wird durch eine Kontermutter 59 gesichert. Hierbei bildet die Kontermutter 59 zugleich eine Krempe 16 im Bezug auf die Spitze 15. Hierbei ist also nicht nur die Länge 14 einstellbar, sondern auch der axiale Versatz 57, also der Abstand zwischen der Kontaktspitze 23 und der Kontermutter 59. Alternativ oder ergänzend zur Kontermutter ist beispielsweise ein trilobulares Gewinde, ein Kantgewinde und/oder ein anaerober Klebstoff zur Sicherung der Schraube in der zweiten Anpressplatte 7 verwendbar. Dieses Einstellprinzip kann auch auf andere nicht als Schraube ausgeführte aber trotzdem mit einem Gewinde versehende Übersetzungsabnehmer 9 übertragen werden.

In Fig. 16 ist eine Übersetzungseinrichtung 8 gezeigt, wobei ein Niet 13 den Übersetzungsabnehmer 9 bildet, der mit dem ersten Flansch 18, der von der zweiten Anpressplatte 7 einstückig gebildet wird, verbunden ist. Hier wird wieder wie in der Fig. 4 und der Fig. 5 eine Einstellung der Spitze 15 und der Krempe und 16, also des axialen Versatzes 57 ermöglicht. Hierbei ist zusätzlich die Kontaktfläche 20 ausgefräst, sodass die Länge 14 des Übersetzungsabnehmers 9 hierdurch verändert wird.

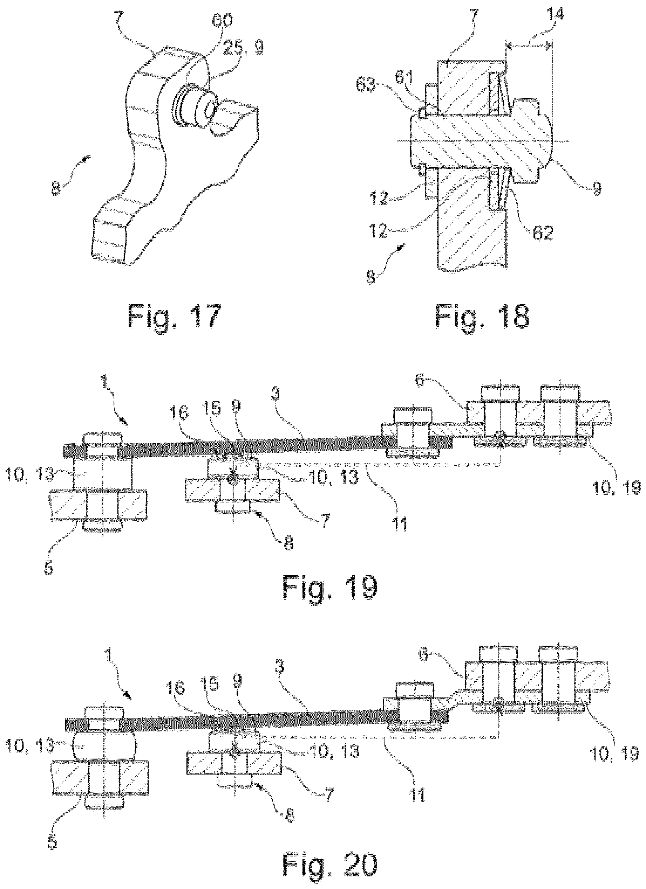

In Fig. 17 ist eine isometrische Ansicht einer Übersetzungseinrichtung 8 gezeigt, wobei der Übersetzungsabnehmer 9 durch einen Stift 25 gebildet ist, welcher durch eine Schweißnaht 60 mit der zweiten Anpressplatte 7 sicher verbunden ist. Die Schweißnaht 60 ist dabei bevorzugt durch Reibschweißen gebildet. Die Lage des Stifts 25 und damit des Übersetzungsabnehmers 9 ist frei wählbar. Hierdurch ist eine Anpassung der Lage in radialer Richtung und/oder in Umfangsrichtung einfach umsetzbar.

In Fig. 18 ist eine Übersetzungseinrichtung 8 gezeigt, bei der ein Bolzen 61 den Übersetzungsabnehmer 9 bildet, und die Länge 14 mittels einer ersten Unterlegscheibe 12 und einer zweiten Unterlegscheibe 12 gebildet wird. Zusätzlich ist eine Tellerfeder 62 vorgesehen, die eine Überlastung der axialen Führungseinrichtung 3 (hier nicht gezeigt) verhindert. Die Position des Bolzens 61 wird hierbei über einen Sicherungsring 63, bevorzugt einen Seegering, ermöglicht. Die hier dargestellte Ausführungsform ist auch mit einem Niet 13 (vergleiche zum Beispiel Fig. 16) und/oder einer Schraube 22 mit Kontermutter 59 (vergleiche Fig. 15) ausführbar. Über die Tellerfeder 62 ist zudem eine veränderliche Kennlinie der Übersetzung ermöglicht.

Über die Unterlegscheibe 12 zwischen dem Sicherungsring 63 und der zweiten Anpressplatte kann die axiale Grundstellung des Bolzens 61 eingestellt werden. Durch die Unterlegscheibe 12 an der sich die Tellerfeder 62 abstützt, kann die Federvorspannung justiert werden.

In Fig. 19 ist ein Übersetzungssystem 1 mit mehreren Justiervorrichtungen 10 gezeigt, wobei diese hier (vergleiche Fig. 20) alle in der Ausgangslage gezeigt sind. Zwischen der axialen Führungseinrichtung 3 und der ersten Gegenplatte 5 ist ein Niet 13 vorgesehen, bei dem ein verformbarer Absatz zwischen der Führungseinrichtung 3 und der Gegenplatte 5 gebildet ist. Bei der zweiten Anpressplatte 7 ist ebenfalls ein Niet 13 mit einem verformbaren Abschnitt gezeigt, wobei hier ebenfalls wieder eine Spitze 15 und eine Krempe 16 bei dem Übersetzungsabnehmer 9 vorgesehen ist. Bei der ersten Anpressplatte 6 ist ein zweiter Flansch 19 vorgesehen, welcher kaltverformbar ist.

In Fig. 20 ist die Konfiguration wie in Fig. 19 gezeigt, wobei hier die Justiervorrichtungen 10 an der Gegenplatte 5 und an der ersten Anpressplatte 6 verformt wurden, und wobei die Form des Übersetzungsabnehmers 9 im Vergleich zum unverformten Zustand in Fig. 19 hier nicht verändert wurde. Es ist aber auch eine Verformung des Übertragungsnehmers 9 möglich, auch wenn dies hier nicht dargestellt und auch nicht in allen Fällen notwendig, . Insbesondere sei auf den Übersetzungsabnehmer 9 hingewiesen, wo der axiale Versatz 57 (vergleiche Fig. 4 oder Fig. 5) zwischen der Spitze 15 und der Krempe 16 in Folge der Verformung des Niets 13 geändert hat. Für Details der Verformung wird auf die Beschreibung der Übertragungseinrichtung 8 in den vorangehenden Figuren verwiesen.

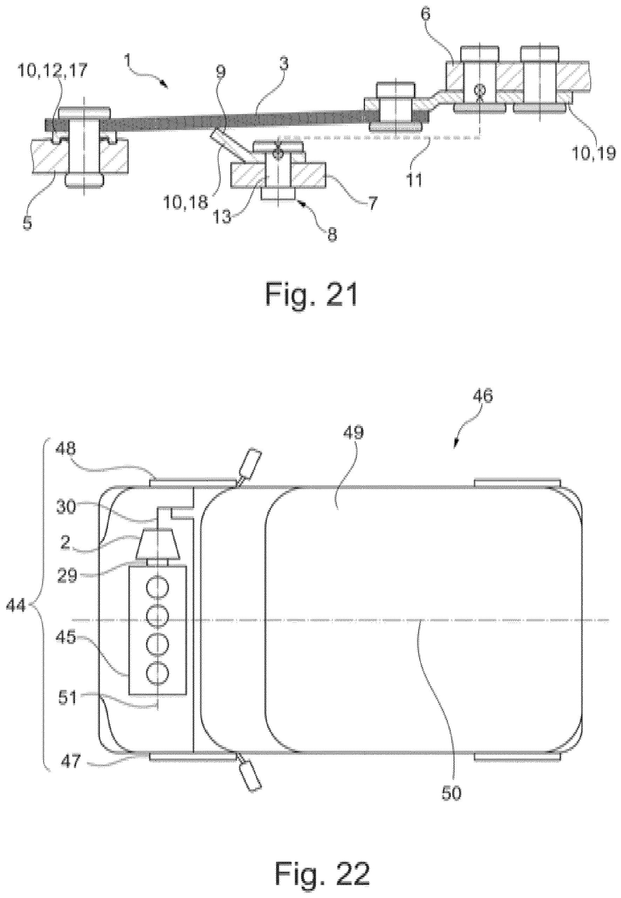

In Fig. 21 ist eine weitere Variante einer ähnlichen Konfiguration wie in Fig. 19 und Fig. 20 gezeigt, bei der die Gegenplatte 5 eine Unterlegscheibe 12 mit einem Pressabschnitt 17 eine Justiervorrichtung 10 bildet. Weiterhin ist bei der zweiten Anpressplatte 7 ein erster Flansch 18 vorgesehen, welcher hier gekantet ist und mit einem Niet 13, bevorzugt mit konstanter Länge, befestigt ist. Die Anbindung der axialen Führungseinrichtung 3 an der ersten Anpressplatte 6 ist hierbei wie in Fig. 20 ausgeführt.

Mit den Einstellmöglichkeiten, die in den Figuren 3, 19; 20 und 21 aufgezeigt sind, können verschiedene Funktionsmerkmale einer Mehrscheibenreibkupplung 2 beeinflusst werden. So kann beispielsweise die axiale Lage der zweiten Anpressplatte 7 relativ zur Gegenplatte 5 und der ersten Anpressplatte 6 verändert werden. Dies kann durch eine Höhenänderung des Übersetzungsnehmers 9 erfolgen (insbesondere Länge 14) und/oder durch eine parallele Verlagerung der axialen Führungseinrichtung 3. Um die Führungseinrichtung 3 parallel zu verlagern, können die Einstelloptionen an beiden Enden der Führungseinrichtung 3 so genutzt werden, dass an der Gegenplatte 5 und der ersten Anpressplatte 6 eine gleichgroße Verlagerung der Führungseinrichtung 3 in dieselbe Richtung erfolgt. Um alternativ oder zusätzlich auch die Position der ersten Anpressplatte 6 zu verändern, bei der sich eine Übersetzungsänderung des Übersetzungssystems 1 einstellt, kann die Position, bei welcher sich ein Anlagewechsel (zum Beispiel Wechsel zwischen Spitze 15 und Krempe 16 oder Wechsel zwischen zwei Übersetzungsabnehmern9 ) der Führungseinrichtung 3 am Übersetzungsnehmer eingestellt und verändert werden. Dies kann erfolgen, indem der Versatz 57 am Übersetzungsabnehmer 9 verändert wird und/oder indem eine Winkellage der Führungseinrichtung 3 relativ zur Position der ersten Anpresslatte 6 verändert wird. Um die Winkellage der Führungseinrichtung 3 anzupassen, ohne die Position der ersten Anpresslatte 6 zu verändern, können die Einstelloptionen an beiden Enden der Führungseinrichtung 3 genutzt werden, indem an der Gegenplatte 5 und der ersten Anpressplatte 6 eine unterschiedlich große Verlagerung erfolgt und/oder die Verlagerungen an den Enden der Führungseinrichtung 3 in entgegengesetzter Richtung erfolgen.

In Fig. 22 ist ein Drehmomentübertragungsstrang 44, umfassend eine Antriebseinheit 45, hier als Verbrennungskraftmaschine dargestellt, eine Abtriebswelle 29, eine Mehrscheibenreibkupplung 2 und ein mittels eines Antriebsstrangs 30 drehmomentübertragend verbundenes linkes Antriebsrad 47 und rechtes Antriebsrad 48, schematisch dargestellt. Der Drehmomentübertragungsstrang 44 ist hier in einem Kraftfahrzeug 46 angeordnet, wobei die Antriebseinheit 45 mit ihrer Motorachse 51 quer zur Längsachse 50 vor der Fahrerkabine 49 angeordnet ist.

Mit der hier vorgeschlagenen Justiervorrichtung ist eine Einstellung des Übersetzungsverhältnisses nach der Montage der Reibelemente einer Mehrscheibenreibkupplung möglich.

### Bezugszeichenliste

- 1: Übersetzungssystem
- 2: Mehrscheibenreibkupplung
- 3: erste axiale Führungseinrichtung
- 4: zweite axiale Führungseinrichtung
- 5: Gegenplatte
- 6: erste Anpressplatte
- 7: zweite Anpressplatte
- 8: Übersetzungseinrichtung
- 9: Übersetzungsabnehmer
- 10: Justiervorrichtung
- 11: relative Lage
- 12: Unterlegscheibe
- 13: Niet
- 14: Länge
- 15: Spitze
- 16: Krempe
- 17: Pressabschnitt
- 18: erster Flansch
- 19: zweiter Flansch
- 20: Kontaktfläche
- 21: Aufnahme
- 22: Schraube
- 23: Kontaktspitze
- 24: Zapfen
- 25: Stift
- 26: erste Reibscheibe
- 27: zweite Reibscheibe
- 28: Rotationsachse
- 29: Abtriebswelle
- 30: Antriebsstrang
- 31: erstes Reibpaket
- 32: zweites Reibpaket
- 33: zweite Gegenplatte
- 34: dritte Anpressplatte
- 35: vierte Anpressplatte
- 36: dritte Reibscheibe
- 37: vierte Reibscheibe
- 38: erster Abstand
- 39: zweiter Abstand
- 40: dritter Abstand
- 41: vierter Abstand
- 42: erste Teilkupplung
- 43: zweite Teilkupplung
- 44: Drehmomentübertragungsstrang
- 45: Antriebseinheit
- 46: Kraftfahrzeug
- 47: linkes Antriebsrad
- 48: rechtes Antriebsrad
- 49: Fahrerkabine
- 50: Längsachse
- 51: Motorachse
- 52: erste Ausgangswelle
- 53: zweite Ausgangswelle
- 54: Betätigungseinrichtung
- 55: erster Betätigungstopf
- 56: zweiter Betätigungstopf
- 57: Versatz
- 58: Durchzugflansch
- 59: Kontermutter
- 60: Schweißnaht
- 61: Bolzen
- 62: Tellerfeder
- 63: Sicherungsring

## Patentansprüche

1. Mehrscheibenreibkupplung (2) mit einer Rotationsachse (28) zum lösbaren Verbinden einer Abtriebswelle (29) mit einem Antriebsstrang (30), aufweisend zumindest die folgenden Komponenten:
- zumindest ein Reibpaket (31,32) mit jeweils zumindest drei Reibplatten (5,6,7,33,34,35) und mit jeweils zumindest zwei jeweils zwischen zwei Reibplatten (5,6,7,33,34,35) angeordneten Reibscheiben (26,27,36,37), über welches im angepressten Zustand ein Drehmoment übertragbar ist;
- zumindest ein Übersetzungssystem (1),
wobei die Anpressplatten (6,7,34,35) von der jeweils benachbarten Reibscheibe (26,27,36,37) jeweils einen gleichen Abstand (38,39,40,41) aufweisen,
das Übersetzungssystem (1), umfassend zumindest die folgenden Komponenten:
- eine Mehrzahl von axialen Führungseinrichtungen (3,4) jeweils zur Anordnung zwischen zwei axial relativ zueinander beweglichen Reibplatten (5,6,7), wobei zumindest eine erste axiale Führungseinrichtung (3) zur Anordnung zwischen einer axial fixierten Gegenplatte (5) und einer ersten axial bewegbaren Anpressplatte (6) eingerichtet ist, und wobei zumindest eine weitere axiale Führungseinrichtung (4) zur Anordnung zwischen einer axial bewegbaren Anpressplatte (6) oder der axial fixierten Gegenplatte (5) und einer weiteren axial bewegbaren Anpressplatte (7) eingerichtet ist;
- zumindest eine Übersetzungseinrichtung (8) mit zumindest einem Übersetzungsabnehmer (9) zur Befestigung an einer Anpressplatte (6), wobei eine Übersetzungseinrichtung (8) einer axialen Führungseinrichtung (3) zugeordnet ist, wobei die zugeordnete axiale Führungseinrichtung (3) im Einbau in einer Mehrscheibenreibkupplung (2) zwischen jeweils anderen Reibplatten (5,7) angeordnet ist,
wobei weiterhin zumindest eine Justiervorrichtung (10) umfasst ist, mittels welcher die relative Lage (11) zwischen der zumindest einen Übersetzungseinrichtung (8) und einer Reibplatte (5,6) oder zwischen der zumindest einen Übersetzungseinrichtung (8) und der zugeordneten axialen Führungseinrichtung (3) oder zwischen einer Reibplatte (5,6) und der zugeordneten axialen Führungseinrichtung (3) justierbar ist.

2. Mehrscheibenreibkupplung (2) nach Anspruch 1, wobei die Justiervorrichtung (10) zumindest eine Unterlegscheibe (12) umfasst, welche jeweils zur Anordnung zwischen zumindest einer der folgenden Paarungen eingerichtet ist:
- dem Übersetzungsabnehmer (9) und der zugeordneten Anpressplatte (7), an der der Übersetzungsabnehmer (9) im Einbau in einer Mehrscheibenreibkupplung (2) befestigt ist; und
- der zugeordneten axialen Führungseinrichtung (3) und einer jeweiligen Reibplatte (5,6), an der die zugeordnete axiale Führungseinrichtung (3) im Einbau befestigt ist.

3. Mehrscheibenreibkupplung (2) nach Anspruch 1 oder 2, wobei die Justiervorrichtung (10) zumindest einen Niet (13) umfasst, wobei der Niet (13) bevorzugt einstückig einen Übersetzungsabnehmer (9) der zumindest einen Übersetzungseinrichtung (8) bildet, wobei der Niet (13) mittels zumindest einer der folgenden Maßnahmen justierbar ist:
- Veränderung der Länge (14) mittels einer definierten Verpressung des Niets (13);
- Veränderung der Kopfform, wobei der Niet (13) bevorzugt eine Spitze (15) und eine Krempe (16) aufweist, wobei die Länge (14) der Spitze (15) und/oder der Krempe (16) und/oder der axiale Versatz (57) zwischen Krempe (16) und Spitze (15) einstellbar ist;
- der Niet (13) einen Pressabschnitt (17) aufweist, wobei mittels des Pressabschnitts (17) der Niet (13) in der zugeordneten Anpressplatte (6) teilweise versenkbar ist; und
- unterschiedliche Niete (13) verwendet werden.

4. Mehrscheibenreibkupplung (2) nach einem der vorhergehenden Ansprüche, wobei die Justiervorrichtung (10) zumindest einen ersten Flansch (18) zur Aufnahme eines Übersetzungsabnehmers (9) der zumindest einen Übersetzungseinrichtung (8) und/oder zumindest einen zweiten Flansch (19) zur Aufnahme der zugeordneten axialen Führungseinrichtung (3) umfasst, wobei der zumindest eine Flansch (18,19) mittels zumindest einer der folgenden Maßnahmen anpassbar ist:
- Fräsen einer Kontaktfläche (20) der Aufnahme (21);
- Kaltverformen zumindest der Kontaktfläche (20) der Aufnahme (21);
- Durchzug eines bolzenförmigen Übersetzungsabnehmers (9); und
- Einpressen eines Übersetzungsabnehmers (9).

5. Mehrscheibenreibkupplung (2) nach einem der vorhergehenden Ansprüche, wobei die Justiervorrichtung (10) zumindest eine Schraube (22) umfasst, wobei die Schraube (22) bevorzugt eine Kontaktspitze (23) eines Übersetzungsabnehmers (9) der zumindest einen Übersetzungseinrichtung (8) ausbildet.

6. Mehrscheibenreibkupplung (2) nach einem der vorhergehenden Ansprüche, wobei die Justiervorrichtung (10) einstückig mit der zugeordneten Anpressplatte (6) als Zapfen (24) ausgebildet ist und den Übersetzungsabnehmer (9) der Übersetzungseinrichtung (8) bildet, wobei der Zapfen (24) mittels Kaltumformen lageveränderbar ist.

7. Mehrscheibenreibkupplung (2) nach einem der vorhergehenden Ansprüche, wobei die Justiervorrichtung (10) als Stift (25) ausgebildet ist, wobei der Stift (15) den Übersetzungsabnehmer (9) der Übersetzungseinrichtung (8) bildet, wobei der Stift (25) an der zugeordneten Anpressplatte (6) mittels Schweißen, bevorzugt Reibschweißen, lageveränderbar befestigbar ist.

8. Verfahren zur Montage eines Übersetzungssystems (1) in einer Mehrscheibenreibkupplung (2) nach einem der vorhergehenden Ansprüche, wobei zunächst die Reibplatten (5,6,7) und Reibscheiben (26,27) in der Mehrscheibenreibkupplung (2) vormontiert und zueinander justiert werden und anschließend das Übersetzungssystem (1) justiert wird.

9. Mehrscheibenreibkupplung (2) nach einem der Ansprüche 1 bis 7, wobei die Mehrscheibenreibkupplung (2) ein Doppelkupplungsaggregat mit zwei Teilkupplungen (42,43) ist, wobei zumindest eine Teilkupplung (42,43) ein Reibpaket (31,32) mit einer Mehrzahl von Anpressplatten (6,7,34,35) und Reibscheiben (26,27,36,37) aufweist.

## Claims

1. A multi-disc friction clutch (2) with an axis of rotation (28) for releasably connecting a drive shaft (29) to a drive train (30), having at least the following components:
- at least one friction pack (31, 32) with at least three friction plates (5, 6, 7, 33, 34, 35) and with at least two friction discs (26, 27, 36, 37) each arranged between two friction plates (5, 6, 7, 33, 34, 35), via which a torque can be transmitted in the pressed state;
- at least one transmission system (1),
wherein the pressure plates (6, 7, 34, 35) are each arranged at the same distance (38, 39, 40, 41) from the respective adjacent friction disc (26, 27, 36, 37),
the transmission system (1), comprising at least the following components:
- a plurality of axial guiding devices (3, 4) each for arrangement between two friction plates (5, 6, 7) axially movable relative to one another, wherein at least one first axial guiding device (3) is designed for arrangement between an axially fixed counter plate (5) and a first axially movable pressure plate (6), and wherein at least one further axial guiding device (4) is designed for arrangement between an axially movable pressure plate (6) or the axially fixed counter plate (5) and a further axially movable pressure plate (7);
- at least one transmission device (8) with at least one transmission receiver (9) for fastening to a pressure plate (6), wherein one transmission device (8) is assigned to an axial guiding device (3), wherein the assigned axial guiding device (3) is installed in a multi-disc friction clutch (2) between the respective other friction plates (5,7),
wherein at least one adjusting device (10) is also comprised, by means of which the relative position (11) can be adjusted between the at least one transmission device (8) and a friction plate (5, 6) or between the at least one transmission device (8) and the assigned axial guiding device (3) or between a friction plate (5, 6) and the assigned axial guiding device (3).

2. The multi-disc friction clutch (2) according to claim 1, wherein the adjusting device (10) comprises at least one washer (12) which is designed for arrangement between at least one of the following pairings:
- the transmission receiver (9) and the assigned pressure plate (7), to which the transmission receiver (9) is fastened when installed in a multi-disc friction clutch (2); and
- the assigned axial guiding device (3) and a respective friction plate (5, 6) to which the assigned axial guiding device (3) is fastened when installed.

3. The multi-disc friction clutch (2) according to claim 1 or 2, wherein the adjusting device (10) comprises at least one rivet (13), wherein the rivet (13) forms, preferably in one piece, a transmission receiver (9) of the at least one transmission device (8), wherein the rivet (13) can be adjusted using at least one of the following measures:
- changing the length (14) by means of a defined pressing of the rivet (13);
- changing the head shape, wherein the rivet (13) preferably has a tip (15) and a brim (16), wherein the length (14) of the tip (15) and/or the brim (16) and/or the axial offset (57) can be adjusted between the brim (16) and the tip (15);
- the rivet (13) has a press section (17), wherein the rivet (13) can be partially retracted in the assigned pressure plate (6) by means of the press section (17); and
- different rivets (13) are used.

4. The multi-disc friction clutch (2) according to one of the preceding claims, wherein the adjusting device (10) has at least one first flange (18) for receiving a transmission receiver (9) of the at least one transmission device (8) and/or at least one second flange (19) for receiving the assigned axial guiding device (3), wherein the at least one flange (18, 19) can be adapted by means of at least one of the following measures:
- milling a contact surface (20) of the receptacle (21);
- cold forming at least the contact surface (20) of the receptacle (21);
- passage through a bolt-shaped transmission receiver (9); and
- pressing of a transmission receiver (9).

5. The multi-disc friction clutch (2) according to one of the preceding claims, wherein the adjusting device (10) comprises at least one screw (22), wherein the screw (22) preferably forms a contact tip (23) of a transmission receiver (9) of the at least one transmission device (8).

6. The multi-disc friction clutch (2) according to one of the preceding claims, wherein the adjusting device (10) is designed in one piece with the assigned pressure plate (6) as a journal (24) and forms the transmission receiver (9) of the transmission device (8), wherein the position of the journal (24) can be changed by means of cold forming.

7. The multi-disc friction clutch (2) according to one of the preceding claims, wherein the adjusting device (10) is designed as a pin (25), wherein the pin (15) forms the transmission receiver (9) of the transmission device (8), wherein the pin (25) can be fastened to the assigned pressure plate (6) in a position-variable manner by means of welding, preferably friction welding.

8. A method for assembling a transmission system (1) in a multi-disc friction clutch (2) according to one of the preceding claims, wherein the friction plates (5, 6, 7) and friction discs (26, 27) are first pre-assembled in the multi-disc friction clutch (2) and adjusted relative to one another and subsequently the transmission system (1) is adjusted.

9. The multi-disc friction clutch (2) according to one of claims 1 to 7, wherein the multi-disc friction clutch (2) is a double clutch unit with two partial clutches (42, 43), wherein at least one partial clutch (42, 43) has a friction pack (31, 32) with a plurality of pressure plates (6, 7, 34, 35) and friction discs (26, 27, 36, 37).

## Revendications

1. Embrayage à friction à plusieurs disques (2) comprenant un axe de rotation (28) permettant de relier de manière amovible un arbre de sortie (29) à une chaîne cinématique (30), comprenant au moins les composants suivants :
- au moins un bloc de friction (31, 32) comportant chacun au moins trois plateaux de friction (5, 6, 7, 33, 34, 35) et respectivement au moins deux disques de friction (26, 27, 36, 37) disposés chacun entre deux plateaux de friction (5, 6, 7, 33, 34, 35), ledit bloc de friction permettant de transmettre un couple lorsqu'il est pressé ;
- au moins un système de transmission (1),
les plateaux de pression (6, 7, 34, 35) ayant chacun la même distance (38, 39, 40, 41) par rapport au disque de friction adjacent respectif (26, 27, 36, 37),
le système de transmission (1), comprenant au moins les composants suivants :
- une pluralité de dispositifs de guidage axial (3, 4) devant être agencés chacun entre deux plateaux de friction axialement mobiles (5, 6, 7) l'un par rapport à l'autre, au moins un premier dispositif de guidage axial (3) devant être agencé entre un contre-plateau axialement fixe (5) et un premier plateau de pression axialement mobile (6), au moins un autre dispositif de guidage axial (4) devant être agencé entre un plateau de pression axialement mobile (6) ou le contre-plateau axialement fixe (5) et un autre plateau de pression axialement mobile (7) ;
- au moins un dispositif de transmission (8) avec au moins un réducteur de transmission (9) devant être fixé à un plateau de pression (6), un dispositif de transmission (8) étant associé à un dispositif de guidage axial (3), le dispositif de guidage axial associé (3) étant monté, lorsqu'il est installé dans un embrayage à friction à plusieurs disques (2), entre les autres plateaux de friction respectifs (5, 7),
au moins un dispositif de réglage (10) étant également inclus, au moyen duquel la position relative (11) entre l'au moins un dispositif de transmission (8) et un plateau de friction (5, 6) ou entre l'au moins un dispositif de transmission (8) et le dispositif de guidage axial associé (3) ou entre un plateau de friction (5, 6) et le dispositif de guidage axial associé (3) peut être réglée.

2. Embrayage à friction à plusieurs disques (2) selon la revendication 1, dans lequel le dispositif de réglage (10) comprend au moins une rondelle (12) devant être agencée entre au moins l'un des accouplements suivants :
- le réducteur de transmission (9) et le plateau de pression associé (7), auquel le réducteur de transmission (9) est fixé lorsqu'il est installé dans un embrayage à friction à plusieurs disques (2) ; et
- le dispositif de guidage axial associé (3) et un plateau de friction respectif (5, 6) sur lequel le dispositif de guidage axial associé (3) est fixé lorsqu'il est installé.

3. Embrayage à friction à plusieurs disques (2) selon la revendication 1 ou 2, dans lequel le dispositif de réglage (10) comprend au moins un rivet (13), le rivet (13) formant de préférence d'un seul tenant un réducteur de transmission (9) de l'au moins un dispositif de transmission (8), le rivet (13) pouvant être réglé en utilisant au moins l'une des mesures suivantes :
- modification de la longueur (14) au moyen d'un pressage défini du rivet (13) ;
- modification de la forme de la tête, le rivet (13) ayant de préférence une pointe (15) et un bord (16), la longueur (14) de la pointe (15) et/ou du bord (16) et/ou le décalage axial (57) entre le bord (16) et la pointe (15) étant réglables ;
- le rivet (13) présentant une partie de presse (17), le rivet (13) étant partiellement rétractable dans le plateau de pression associé (6) au moyen de la partie de presse (17) ; et
- différents rivets (13) peuvent être utilisés.

4. Embrayage à friction à plusieurs disques (2) selon l'une quelconque des revendications précédentes, dans lequel le dispositif de réglage (10) comporte au moins une première joue (18) pour recevoir un réducteur de transmission (9) de l'au moins un dispositif de transmission (8) et/ou au moins une deuxième joue (19) pour recevoir le dispositif de guidage axial associé (3), l'au moins une joue (18, 19) étant adaptable au moyen d'au moins l'une des mesures suivantes :
- fraisage d'une surface de contact (20) du réceptacle (21) ;
- déformation à froid d'au moins la surface de contact (20) du réceptacle (21) ;
- passage d'un réducteur de transmission en forme de boulon (9) ; et
- pressage d'un réducteur de transmission (9).

5. Embrayage à friction à plusieurs disques (2) selon l'une quelconque des revendications précédentes, dans lequel le dispositif de réglage (10) comprend au moins une vis (22), la vis (22) formant de préférence une pointe de contact (23) d'un réducteur de transmission (9) de l'au moins un dispositif de transmission (8).

6. Embrayage à friction à plusieurs disques (2) selon l'une quelconque des revendications précédentes, dans lequel le dispositif de réglage (10) est réalisé d'un seul tenant avec le plateau de pression associé (6) en tant que tenon (24) et forme le réducteur de transmission (9) du dispositif de transmission (8), le tenon (24) pouvant être déplacé par déformation à froid.

7. Embrayage à friction à plusieurs disques (2) selon l'une quelconque des revendications précédentes, dans lequel le dispositif de réglage (10) est réalisé sous la forme d'une tige (25), la tige (15) constituant le réducteur de transmission (9) du dispositif de transmission (8), la tige (25) sur le plateau de pression associé (6) pouvant être fixée dans une position variable au moyen d'un soudage, de préférence d'un soudage par friction.

8. Procédé d'assemblage d'un système de transmission (1) dans un embrayage à friction à plusieurs disques (2) selon l'une quelconque des revendications précédentes, dans lequel d'abord les plateaux de friction (5, 6, 7) et les disques de friction (26, 27) sont préassemblés dans l'embrayage à friction à plusieurs disques (2) et ajustés l'un par rapport à l'autre, puis le système de transmission (1) est ajusté.

9. Embrayage à friction à plusieurs disques (2) selon l'une quelconque des revendications 1 à 7, dans lequel l'embrayage à friction à plusieurs disques (2) est une unité à double embrayage avec deux embrayages partiels (42, 43), au moins un embrayage partiel (42, 43) présentant un bloc de friction (31, 32) doté d'une pluralité de plateaux de pression (6, 7, 34, 35) et de disques de friction (26, 27, 36, 37).
